# EUROPEAN PATENT SPECIFICATION

(11) **EP 3 577 837 B1**
(45) Date of publication and mention of the grant of the patent: **14.12.2022**
(21) Application number: 18706908.3
(22) Date of filing: 02.02.2018
(51) Int. Cl.: H04L 5/00

(54) **USER EQUIPMENT AND WIRELESS COMMUNICATION METHOD**
BENUTZERGERÄT UND DRAHTLOSKOMMUNIKATIONSVERFAHREN
ÉQUIPEMENT UTILISATEUR ET PROCÉDÉ DE COMMUNICATION SANS FIL

(30) Priority: 03.02.2017 US 201762454458 P
(43) Date of publication of application: 11.12.2019
(73) Proprietor: NTT DOCOMO, INC., Chiyoda-ku Tokyo 100-6150 (JP)
(72) Inventor: KAKISHIMA, Yuichi, Tokyo 100-6150 (JP); NA, Chongning, Tokyo 100-6150 (JP); TAKEDA, Kazuaki, Tokyo 100-6150 (JP); NAGATA, Satoshi, Tokyo 100-6150 (JP)
(74) Representative: Hoffmann Eitle
(86) International application number: PCT/US2018/016660
(87) International publication number: WO 2018/144876

(56) References cited:
- EP-A2- 3 094 011
- WO-A2-2016/024912

## Description

### [Technical Field]

The present invention generally relates to a user equipment and a wireless communication method of reporting a resource that is out-of-range.

### [Background Art]

In a legacy mechanism in a release 13 (Rel. 13) Long Term Evolution-Advanced (LTE-A) system, a user equipment (UE) reports Channel State Information (CSI) with a combination of beam-related information (precoding-related information) (CSI-RS Resource Indicator (CRI) and Precoding Matrix Indicator (PMI)) and Channel Quality Information (Channel Quality Indicator (CQI)) to a Evolved NodeB (eNB). If a propagation condition is poor, the UE notify the eNB of an "out-of-range" status by setting a payload of the CQI to "0."

On the other hand, in a New Radio (NR) (Fifth Generation (5G)) system, the UE does not necessarily report the CSI with the combination of the beam-related information and the CQI to a next Generation NodeB (gNB). For example, at an initial phase of beam management, the UE may report the CSI with the only beam-related information (without the CQI). That is, the NR system does not support the legacy mechanism to report the out-of-range status. As a result, the UE is required to report one of beams, which is actually a useless beam, even when the beams are in the poor conditions in which the beamformed CSI-Reference Signals (CSI-RSs) are out-of-range. In such case, the gNB is unaware that the CSI is reported based on the useless beam, and as a result, the gNB may select a beam that is not best and transmit data using the selected beam. This may cause communication failure.

### [Citation List]

### [Non-Patent Reference]

[Non-Patent Reference 1] 3GPP, TS 36.211 V 13.4.0
[Non-Patent Reference 2] 3GPP, TS 36.213 V13.4.0
[Patent Reference 1] WO 2016/024912 A2
[Patent Reference 2] EP 3 094 011 A2

### [Summary of the Invention]

The above problems are addressed by the user equipment of claim 1 and the wireless communication method of claim 5. The dependent claims concern particular embodiments.

### [Brief Description of the Drawings]

FIG. 1 is a diagram showing a configuration of a wireless communication system according to one or more embodiments of the present invention.
FIG. 2 is a sequence diagram showing an operation example of a beam selection scheme according to a first example.
FIG. 3 is a sequence diagram showing an operation example of a beam selection scheme according to a second example.
FIG. 4 is a diagram showing an example of a conventional BI table and a newly designed BI table.
FIG. 5 is a flow chart showing an example of an operation to implicitly switch a conventional BI table and a newly designed BI table.
FIG. 6 is a sequence diagram showing an operation example of a beam selection scheme according to one or more embodiments of a third example.
FIG. 7 is a flow chart showing an example of an operation to implicitly switch a conventional PMI table and a newly designed PMI table.
FIG. 8 is a sequence diagram showing an operation example of a beam selection scheme according to one or more embodiments of a fourth example.
FIG. 9 is a sequence diagram showing an operation example of a beam selection scheme according to one or more embodiments of a fifth example.
FIG. 10 is a diagram showing a schematic configuration of the BS according to one or more embodiments of the present invention.
FIG. 11 is a diagram showing a schematic configuration of the UE according to one or more embodiments of the present invention.

### [Detailed Description of Embodiments]

Embodiments of the present invention will be described in detail below, with reference to the drawings. In embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid obscuring the invention.

In one or more embodiments of the present invention, a beam may be referred to as a resource, RS resource, or CSI-RS resource.

In one or more embodiments of the present invention, a beam index (BI) may be replaced with a CSI-RS Resource Indicator (CRI) or a Synchronization Signal Block Resource Indicator (SSBRI).

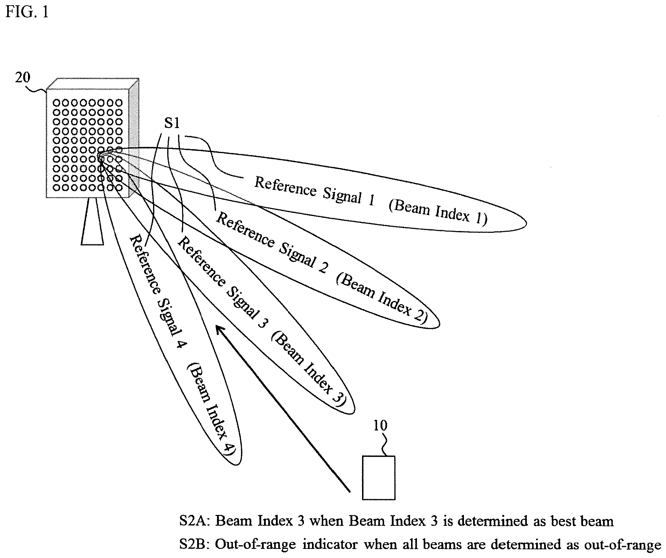

FIG. 1 is a wireless communications system 1 according to one or more embodiments of the present invention. The wireless communication system 1 includes a user equipment (UE) 10 and a base stations (BS) 20. The wireless communication system 1 may be a New Radio (NR) system. The wireless communication system 1 is not limited to the specific configurations described herein and may be any type of wireless communication system such as an LTE/LTE-Advanced (LTE-A) system.

The BS 20 may communicate uplink (UL) and downlink (DL) signals with the UE 10 in a cell of the BS 20. The DL and UL signals may include control information and user data. The BS 20 may be new Generation NodeB (gNB).

The BS 20 includes antennas, a communication interface to communicate with an adjacent BS 20 (for example, X2 interface), a communication interface to communicate with a core network (for example, S1 interface), and a CPU (Central Processing Unit) such as a processor or a circuit to process transmitted and received signals with the UE 10. Operations of the BS 20 may be implemented by the processor processing or executing data and programs stored in a memory. However, the BS 20 is not limited to the hardware configuration set forth above and may be realized by other appropriate hardware configurations as understood by those of ordinary skill in the art. Numerous BSs 20 may be disposed so as to cover a broader service area of the wireless communication system 1.

The UE 10 may communicate DL and UL signals that include control information and user data with the BS 20 using MIMO technology. The UE 10 may be a mobile station, a smartphone, a cellular phone, a tablet, a mobile router, or information processing apparatus having a radio communication function such as a wearable device. The wireless communication system 1 may include one or more UEs 10. The UE 10 may receive at least a Reference Signal (RS) from the BS 20. In one or more embodiments of the present invention, the RS is CSI-RS. In one or more embodiments not being part of the present invention, the RS may be a Synchronization Signal Block (SSB).

The UE 10 includes a CPU such as a processor, a RAM (Random Access Memory), a flash memory, and a radio communication device to transmit/receive radio signals to/from the BS 20 and the UE 10. For example, operations of the UE 10 described below may be implemented by the CPU processing or executing data and programs stored in a memory. However, the UE 10 is not limited to the hardware configuration set forth above and may be configured with, e.g., a circuit to achieve the processing described below.

In one or more embodiments of the present invention, as shown in FIG. 1, at a step S1, the BS 20 may transmit RSs "1" to "4", which may be transmitted with same or different beamforming having BI "1" to "4," respectively. Thus, the BS 20 may transmit multiple RSs using resources to the UE 10. Each of the multiple RSs are associated with each of resources.

In one or more embodiments of the present invention, when there is no proper beam the UE 10 should select, the UE 10 determines the beams as "out-of-range" (out-of-range state). When the UE 10 receives the RSs from the BS 20, the UE 10 may determine whether the beams are "out-of-range." When Reference Signal Received Power (RSRP) of each RSs is lower than a predetermined reference value, the UE 10 determines the beams as out-of-range. Furthermore, when Channel Quality Indicator (CQI) calculated based on each RSs is lower than a predetermined reference value, the UE 10 determines the beams as out-of-range. Furthermore, when any signal is not detected for the predetermined resource, the UE 10 determines the beams as out-of-range.

In Fig. 1, for example, when the UE 10 determines that the beam of the BI "3" is the best beam, at a step S2A, the UE 10 may transmit the BI "3" to the BS 20. On the other hand, when the UE 10 determines the beams as out-of-range, at a step S2B, the UE 10 transmits an out-of-range indicator to the BS 20 even when the CQI is not transmitted as feedback.

### (First Example)

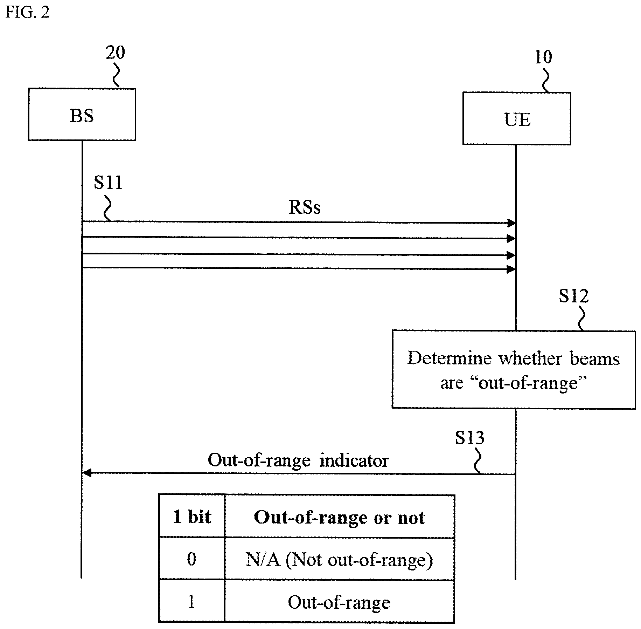

Embodiments of a first example of the present invention will be described in detail below. According to one or more embodiments of the first example of the present invention, out-of-range may be multiplexed on beam-related information. For example, the beam-related information may be at least one of the BI, the CRI, the SSBRI, and a Precoding Matrix Indicator (PMI). For example, the beam-related information may be either of single or multiple. FIG. 2 is a sequence diagram showing an example operation of a beam selection scheme according to one or more embodiments of the first example of the present invention.

As shown in FIG. 2, at step S11, the BS 20 may transmit multiple RSs. The RSs may be transmitted using respectively different beams. Each of the multiple RSs is associated with each of the beams (resources).

When the UE 10 receives the multiple RSs transmitted from the BS 20 using beams (resources), at a step S12, the UE 10 performs beam selection in which at least a beam is selected from the resources used for the RS transmission and determines whether the beams are out-of-range. When the UE 10 determines that the beams are out-of-range, at a step S13, the UE 10 transmits an out-of-range indicator indicated as one bit, in which a parameter is set as e.g., "1". For example, as shown in Fig. 2, the parameter "0" and "1" of the out-of-range indicator indicates "N/A (not out-of-range)" and "out-of-range", respectively. The indicator can be separately or jointly reported with other reporting information, e.g., Beam Index (BI).

Thus, according to one or more embodiments of the first example of the present invention, the UE 10 can notify the BS 20 of out-of-range without using the CQI format.

Furthermore, the BS 20 transmits, to the UE 10, information indicating whether the UE 10 should notify the BS 20 of out-of-range, using a Radio Resource Control (RRC) signaling. As another example, if UE is configured to report only beam-related information (without reception quality information of the beam, e.g., RSRP or CQI), UE 10 should notify the BS 20 of out-of-range indicator.

### (Second Example)

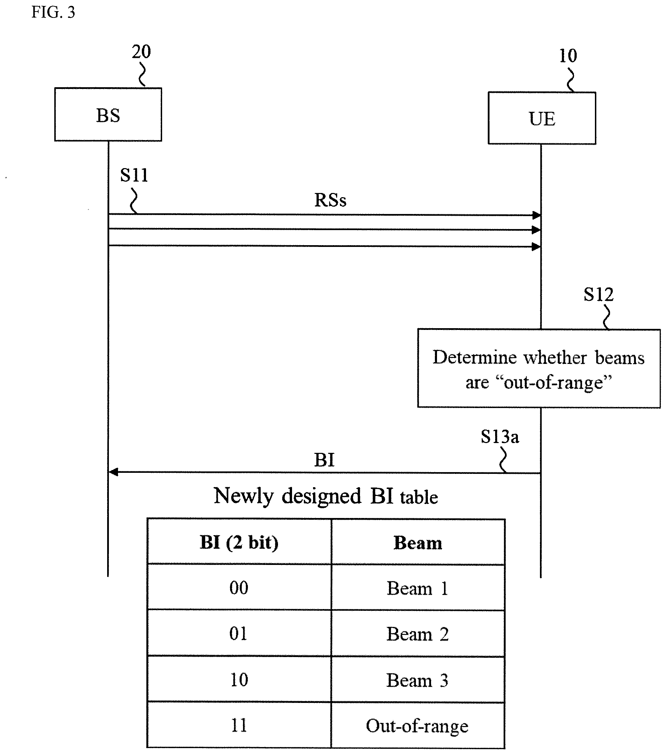

Embodiments of a second example not being part of the present invention will be described in detail below. According to one or more embodiments of the second example, out-of-range may be multiplexed on the beam-related information. According to one or more embodiments of the second example of the present invention, the UE 10 may notify the BS 20 of out-of-range using a newly designed BI table. FIG. 3 is a sequence diagram showing an example operation of a beam selection scheme according to one or more embodiments of the second example. Similar steps in FIG. 3 to steps in FIG. 2 may have the same reference label.

According to one or more embodiments of the second example, at the step S 12, the UE 10 performs beam selection in which at least a beam is selected from the resources used for the RS transmission and determines whether the beams are out-of-range at the step S12.

At a step S13a, When the UE 10 determines that the beams are not out-of-range, the UE 10 may transmit a BI (or CRI) that indicates the selected beam.

On the other hand, at the step S13a, when the UE 10 determines that the beams are out-of-range, the UE 10 may transmit, to the BS 20, the BI indicating that the beams are out-of-range. In an example of FIG. 3, the BI may be set as "11" that indicates out-of-range using a newly designed BI table. For example, the UE 10 may determine that the beams are out-of-range when the RSRP of each of the multiple RSs is not greater than a predetermined value.

Thus, according to one or more embodiments of the second example, the UE 10 can notify the BS 20 of out-of-range in BI feedback without using the CQI format.

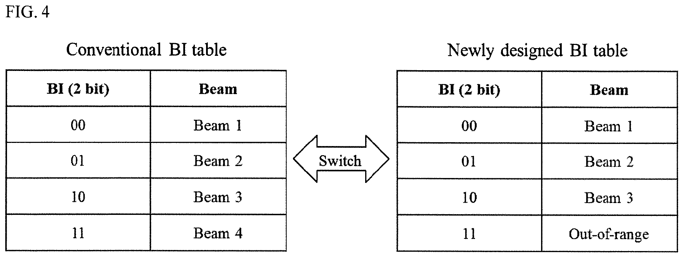

According to one or more embodiments of the second example, a conventional BI table and the newly designed BI table may be switched. FIG. 4 is a diagram showing an example of a conventional BI table and the newly designed BI table according to one or more embodiments of the second example. In the conventional method, the UE 10 transmits an indicator that indicates the selected resource when the UE 10 determines that the first resources are out-of-range in the resource selection. That is, in the conventional method, the indicator does not indicate that the beams are out-of-range.

For example, the conventional BI table and the newly designed BI table may be explicitly switched. For example, the conventional BI table and the newly designed BI table may be switched based on the RRC signaling from the BS 20 to the UE 10.

For example, if UE is configured to report only beam-related information (without reception quality information of the beam, e.g., RSRP or CQI), the UE may use the newly designed BI table for the BI feedback (S104).

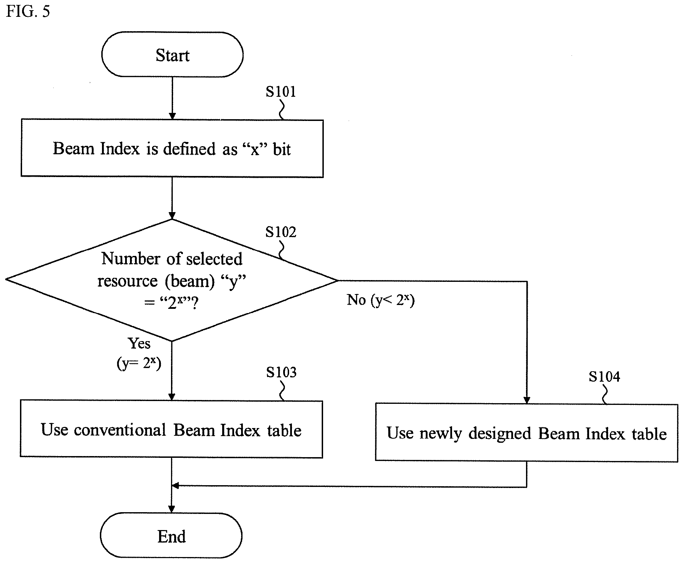

For example, the conventional BI table and the newly designed BI table may be implicitly switched. As shown in FIG. 5, when the BI is defined as "x" bit (step S101), the UE 10 may determine whether the number of selected resource (beam) "y" is "2^{x}" (step S102). If yes (that is, "y"="2^{x}"), the UE 10 may use the conventional BI table for the BI feedback (SI03). On the other hand, if no (that is, "y"<"2^{x}"), the UE may use the newly designed BI table for the BI feedback (S104).

Furthermore, at the step S102, if no ("y"<"2^{x}"), an index greater than "y" in the newly designed BI table may indicate out-of-range. For example, "y+1" which is the index greater than "y" may indicate out-of-range. As another example, a maximum index ("11" in FIG. 4) in the newly designed BI table may indicate out-of-range. As another example, a minimum (first) index ("00" in FIG. 4) in the newly designed BI table may indicate out-of-range.

Furthermore, in the above example, when the UE 10 is configured with "2^{x}" resources (beams) and required to report out-of-range, the UE 10 may exclude one of the resources from candidates of the resources to be reported to the BS 20. In such case, the BS 20 may designate the excluded resource explicitly or implicitly. As another example, the excluded resource may be determined based on a predetermined rule. For example, the predetermined rule may determine the maximum (or minimum) index of the BI as the excluded resource.

Thus, when the BI (CRI or SSBRI) is defined as a predetermined bit number, if the number of the beams used for the RSs transmission is less than two to the power of the predetermined bit number, the UE 10 transmits the selected beams or information indicating that beams are out-of-range using the newly designed BI. On the other hand, when the number of the beams used for the RSs transmission is equal to two to the power of the predetermined bit number, the UE 10 transmits the selected beam using the conventional BI table that does not include out-of-range. As another example, when the number of the beams used for the RSs transmission is equal to two to the power of the predetermined bit number, the UE 10 may indicate out-of-range by replacing one of parameters of the CRI with out-of-range.

### (Third Example)

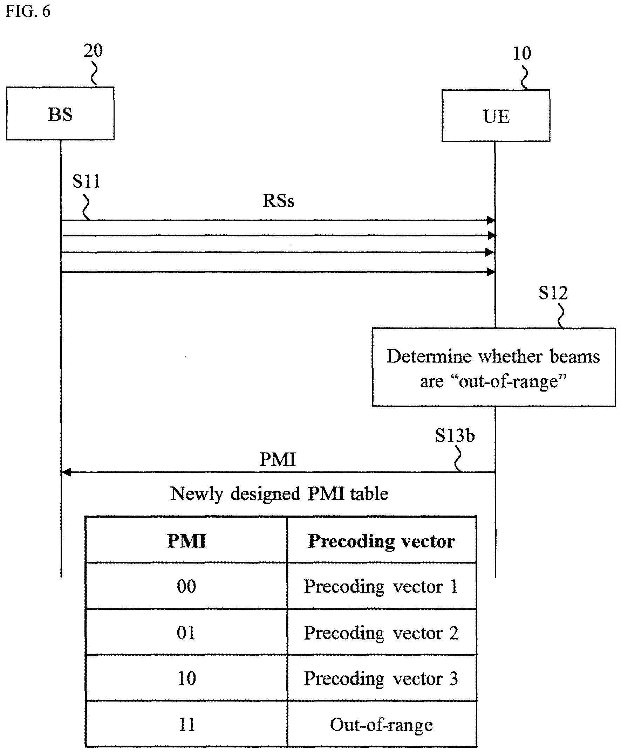

Embodiments of a third example not being part of the present invention will be described in detail below. According to one or more embodiments of the second example, out-of-range may be multiplexed on the beam-related information. According to one or more embodiments of the third example, the UE 10 may notify the BS 20 of out-of-range using a newly designed PMI table. FIG. 6 is a sequence diagram showing an example operation of a beam selection scheme according to one or more embodiments of the third example. Similar steps in FIG. 6 to steps in FIG. 2 may have the same reference label.

According to one or more embodiments of the third example, when the UE 10 determines the beams as out-of-range at the step S12, the UE 10 may transmit, to the BS 20, the PMI indicating out-of-range using a newly designed PMI table at a step S13b. For example, when out-of-range reporting is activated in the UE 10, the UE 10 may exclude a part of candidates of precoding vectors to be selected to use the PMI index as out-of-range (method of sub-sampling). For example the method of sub-sampling may be designated by the BS 20 and/or defined as a specification.

Thus, according to one or more embodiments of the third example, the UE 10 can notify the BS 20 of out-of-range in PMI feedback without using the CQI format.

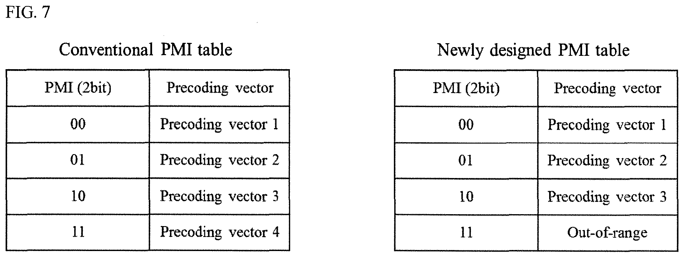

According to one or more embodiments of the third example, a conventional PMI table and the newly designed PMI table may be switched. FIG. 7 is a diagram showing an example of a conventional PMI table and the newly designed PMI table according to one or more embodiments of the third example.

For example, the conventional PMI table and the newly designed PMI table may be explicitly switched. For example, the conventional PMI table and the newly designed PMI table may be switched based on the RRC signaling from the BS 20 to the UE 10.

In one or more embodiments of the third example, the UE 10 may stop transmitting beam-related information, because the BS 20 (gNB) may be able to detect presence or absence of the beam-related information.

In one or more embodiments of the third example, the UE 10 may transmit an uplink signal used for beam recovery in an uplink.

### (Fourth Example)

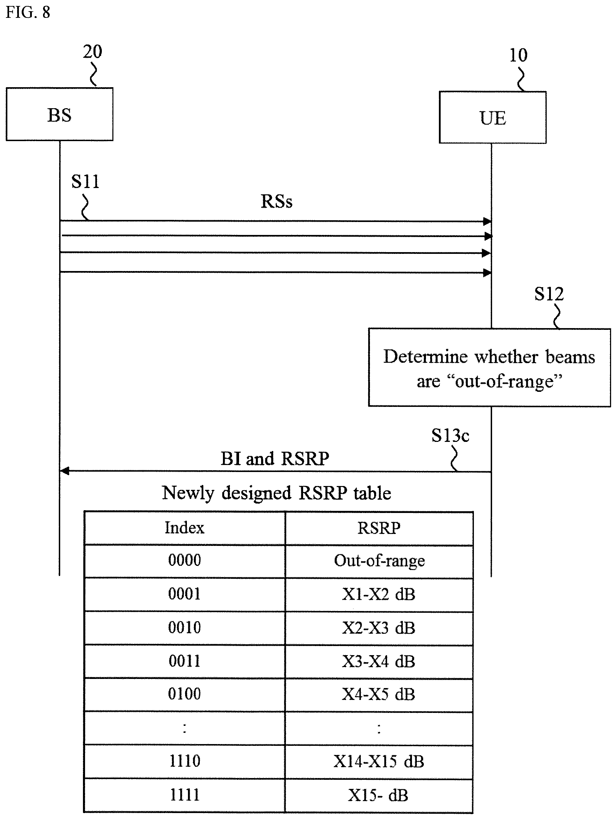

Embodiments of a fourth example not being part of the present invention will be described in detail below. In the beam selection scheme, the selected BI and reception quality information corresponding to the selected BI. According to one or more embodiments of the fourth example, the UE 10 may notify the BS 20 of out-of-range using reception quality information, e.g., a newly designed RSRP table. FIG. 8 is a sequence diagram showing an example operation of a beam selection scheme according to one or more embodiments of the fourth example. Similar steps in FIG. 8 to steps in FIG. 2 may have the same reference label.

According to one or more embodiments of the fourth example, when the UE 10 determines the beams as out-of-range at the step S12, the UE 10 may transmit, to the BS 20, the BI and the RSRP indicating out-of-range using a newly designed RSRP table at a step S13c.

Thus, according to one or more embodiments of the fourth example, out-of-range may be multiplexed on the RSRP.

According to one or more embodiments of the fourth example, for example, when the RSRP is transmitted from the UE 10 to the BS 20, out-of-range may be multiplexed on the RSRP. On the other hand, when the RSRP is not transmitted from the UE 10 to the BS 20, out-of-range may be multiplexed on the beam-related information.

### (Fifth Example)

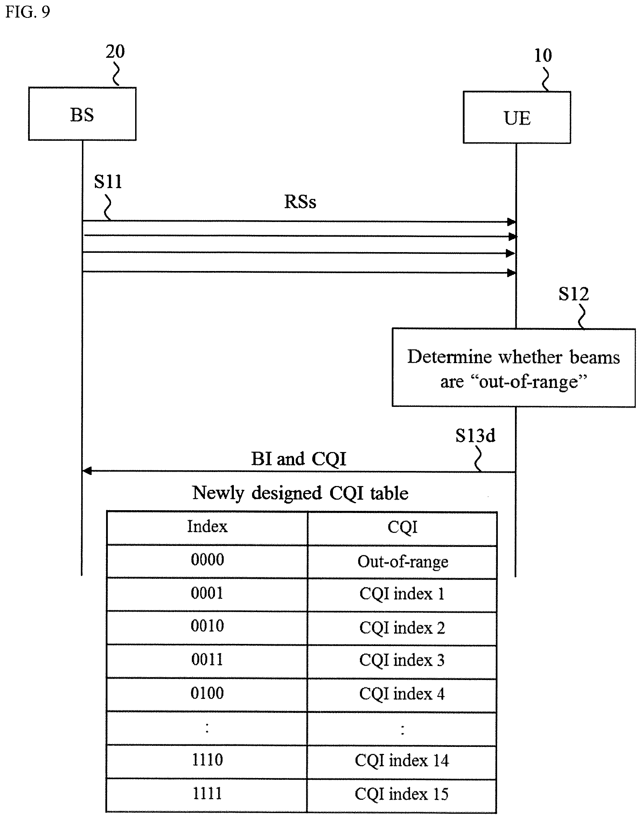

Embodiments of a fifth example not being part of the present invention will be described in detail below. In the beam selection scheme, the selected BI and reception quality information corresponding to the selected BI. According to one or more embodiments of the fifth example, the UE 10 may notify the BS 20 of out-of-range using a newly designed CQI table. FIG. 9 is a sequence diagram showing an example operation of a beam selection scheme according to one or more embodiments of the fifth example. Similar steps in FIG. 8 to steps in FIG. 2 may have the same reference label.

According to one or more embodiments of the fifth example, when the UE 10 determines the beams as out-of-range at the step S12, the UE 10 may transmit, to the BS 20, the BI and the CQI indicating out-of-range using a newly designed CQI table at a step S13d.

Thus, according to one or more embodiments of the fifth example, out-of-range may be multiplexed on the CQI.

According to one or more embodiments of the fifth example, for example, when the CQI is transmitted from the UE 10 to the BS 20, out-of-range may be multiplexed on the CQI. On the other hand, when the CQI is not transmitted from the UE 10 to the BS 20, out-of-range may be multiplexed on the beam-related information.

### (Configuration of Base Station)

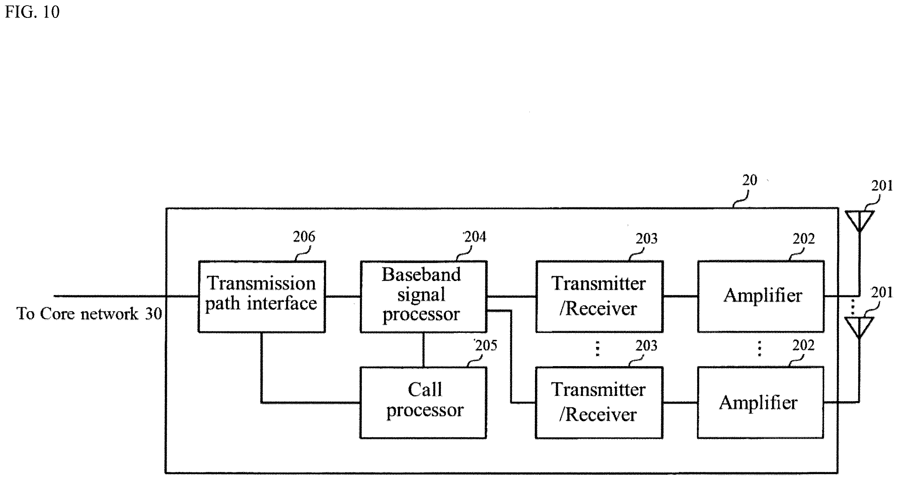

The BS 20 according to one or more embodiments of the present invention will be described below with reference to FIG. 10. FIG. 10 is a diagram illustrating a schematic configuration of the BS 20 according to one or more embodiments of the present invention. The BS 20 may include a plurality of antennas (antenna element group) 201, amplifier 202, transceiver (transmitter/receiver) 203, a baseband signal processor 204, a call processor 205 and a transmission path interface 206.

User data that is transmitted on the DL from the BS 20 to the UE 20 is input from the core network 30, through the transmission path interface 206, into the baseband signal processor 204.

In the baseband signal processor 204, signals are subjected to Packet Data Convergence Protocol (PDCP) layer processing, Radio Link Control (RLC) layer transmission processing such as division and coupling of user data and RLC retransmission control transmission processing, Medium Access Control (MAC) retransmission control, including, for example, HARQ transmission processing, scheduling, transport format selection, channel coding, inverse fast Fourier transform (IFFT) processing, and precoding processing. Then, the resultant signals are transferred to each transceiver 203. As for signals of the DL control channel, transmission processing is performed, including channel coding and inverse fast Fourier transform, and the resultant signals are transmitted to each transceiver 203.

The baseband signal processor 204 notifies each UE 10 of control information (system information) for communication in the cell by higher layer signaling (e.g., RRC signaling and broadcast channel). Information for communication in the cell includes, for example, UL or DL system bandwidth.

In each transceiver 203, baseband signals that are precoded per antenna and output from the baseband signal processor 204 are subjected to frequency conversion processing into a radio frequency band. The amplifier 202 amplifies the radio frequency signals having been subjected to frequency conversion, and the resultant signals are transmitted from the antennas 201.

As for data to be transmitted on the UL from the UE 10 to the BS 20, radio frequency signals are received in each antennas 201, amplified in the amplifier 202, subjected to frequency conversion and converted into baseband signals in the transceiver 203, and are input to the baseband signal processor 204.

The baseband signal processor 204 performs FFT processing, IDFT processing, error correction decoding, MAC retransmission control reception processing, and RLC layer and PDCP layer reception processing on the user data included in the received baseband signals. Then, the resultant signals are transferred to the core network 30 through the transmission path interface 206. The call processor 205 performs call processing such as setting up and releasing a communication channel, manages the state of the BS 20, and manages the radio resources.

### (Configuration of User Equipment)

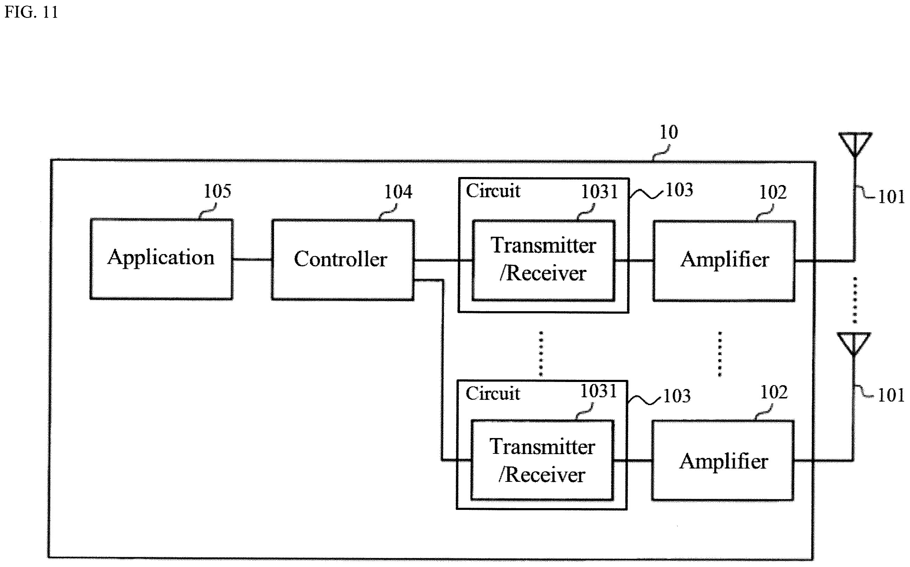

The UE 10 according to one or more embodiments of the present invention will be described below with reference to FIG. 11. FIG. 11 is a schematic configuration of the UE 10 according to one or more embodiments of the present invention. The UE 10 has a plurality of UE antennas 101, amplifiers 102, the circuit 103 comprising transceiver (transmitter/receiver) 1031, the controller 104, and an application 105.

As for DL, radio frequency signals received in the UE antennas 101 are amplified in the respective amplifiers 102, and subjected to frequency conversion into baseband signals in the transceiver 1031. These baseband signals are subjected to reception processing such as FFT processing, error correction decoding and retransmission control and so on, in the controller 104. The DL user data is transferred to the application 105. The application 105 performs processing related to higher layers above the physical layer and the MAC layer. In the downlink data, broadcast information is also transferred to the application 105.

On the other hand, UL user data is input from the application 105 to the controller 104. In the controller 104, retransmission control (Hybrid ARQ) transmission processing, channel coding, precoding, DFT processing, IFFT processing and so on are performed, and the resultant signals are transferred to each transceiver 1031. In the transceiver 1031, the baseband signals output from the controller 104 are converted into a radio frequency band. After that, the frequency-converted radio frequency signals are amplified in the amplifier 102, and then, transmitted from the antenna 101.

### (Another Example)

One or more embodiments of the present invention may be used for each of the uplink and the downlink independently. One or more embodiments of the present invention may be also used for both of the uplink and the downlink in common.

Although the present disclosure mainly described examples of a channel and signaling scheme based on NR, the present invention is not limited thereto. One or more embodiments of the present invention may apply to another channel and signaling scheme having the same functions as LTE/LTE-A and a newly defined channel and signaling scheme.

Although the present disclosure mainly described examples of channel estimation and CSI feedback scheme based on the RS, the present invention is not limited thereto. One or more embodiments of the present invention may apply to another synchronization signal, reference signal, and physical channel such as CSI-RS, synchronization signal (SS), measurement RS (MRS), mobility RS (MRS), and beam RS (BRS).

Although the present disclosure mainly described examples of various signaling methods, the signaling according to one or more embodiments of the present invention may be explicitly or implicitly performed.

Although the present disclosure mainly described examples of various signaling methods, the signaling according to one or more embodiments of the present invention may be the higher layer signaling such as the RRC signaling and/or the lower layer signaling such as Downlink Control Information (DCI) and MAC Control Element (CE). Furthermore, the signaling according to one or more embodiments of the present invention may use a Master Information Block (MIB) and/or a System Information Block (SIB). For example, at least two of the RRC, the DCI, and the MAC CE may be used in combination as the signaling according to one or more embodiments of the present invention.

Although the present disclosure described examples of the beamformed RS (RS transmission using the beam), whether the physical signal/channel is beamformed may be transparent for the UE. The beamformed RS and the beamformed signal may be called the RS and the signal, respectively. Furthermore, the beamformed RS may be referred to as a RS resource. Furthermore, the beam selection may be referred to as resource selection. Furthermore, the Beam Index may be referred to as a resource index (indicator) or an antenna port index.

The UE antennas according to one or more embodiments of the present invention may apply to the UE including one dimensional antennas, planer antennas, and predetermined three dimensional antennas.

In one or more embodiments of the present invention, the Resource Block (RB) and a subcarrier in the present disclosure may be replaced with each other. A subframe, a symbol, and a slot may be replaced with each other.

The above examples and modified examples may be combined with each other, and various features of these examples can be combined with each other in various combinations. The invention is not limited to the specific combinations disclosed herein.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

## Claims

1. A user equipment, UE, (10) comprising:
a receiver (1031) configured to receive multiple Channel State Information Reference Signals, CSI-RSs, transmitted from a base station, BS, using first beams; wherein each of the multiple CSI-RSs is associated with each of the first beams,
a processor (104) configured to perform beam selection in which at least a second beam is selected from the first beams; and
a transmitter (1031) configured to transmit, to the BS, a first indicator that indicates the second beam, wherein
when *Reference Signal Received Power,* RSRP, of each of the CSI-RSs is not greater than a predetermined value the processor determines that there is no beam to be selected from the first beams, and **characterised in that**
the receiver is further configured to receive, from the BS using Radio Resource Control, RRC, signaling, information indicating whether the UE should transmit a second indicator indicating that there is no beam to be selected from the first beams, and
when the BS requires a second indicator, indicating that there is no beam to be selected from the first beams to be transmitted, the transmitter is configured to transmit the second indicator as one-bit information to the BS.

2. The UE (10) according to claim 1, wherein the processor measures the RSRP of each of the multiple CSI-RSs.

3. The UE (10) according to claim 1, wherein the first indicator is defined as a predetermined bit number, and a number of the first beams is less than two to the power of the predetermined bit number.

4. The UE (10) according to claim 1, wherein the first indicator anis defined as a predetermined bit number, and a number of the first beams is equal to two to the power of the predetermined bit number.

5. A wireless communication method comprising:
receiving, with a user equipment, UE, multiple Channel State Information Reference Signals, CSI-RSs, transmitted from a base station, BS, using first beams; wherein each of the multiple CSI-RSs is associated with each of the first beams;
performing beam selection in which at least a second beam is selected from the first beams; and
transmitting, from the UE to the BS, a first indicator that indicates the second beam;
wherein, when Reference Signal Received Power, RSRP, of each of the CSI-RSs is not greater than a predetermined value the UE determines that there is no beam to be selected from the first beams, and **characterised by**
receiving, from the BS using Radio Resource Control, RRC, signaling information indicating whether the UE should transmit a second indicator indicating that there is no beam to be selected from the first beams, and
when the BS requires a second indicator, indicating that there is no beam to be selected from the first beams to be transmitted, transmitting, from the UE to the BS, the second indicator as one-bit information to the BS.

6. The wireless communication method according to claim 5, further comprising, measuring, with the UE, the RSRP of each of the multiple CSI-RSs.

7. The wireless communication method according to claim 5, wherein the first indicator is defined as a predetermined bit number, and a number of the first beams is less than two to the power of the predetermined bit number.

8. The wireless communication method according to claim 5, wherein the first indicator is defined as a predetermined bit number, and a number of the first beams is equal to two to the power of the predetermined bit number.

## Patentansprüche

1. Benutzerendgerät, UE, (10), umfassend:
einen Empfänger (1031), der konfiguriert ist, um mehrere Kanalzustandsinformationsreferenzsignale, CSI-RSs, die von einer Basisstation, BS, unter Verwendung von ersten Strahlen übertragen werden, zu empfangen; wobei jedes der mehreren CSI-RSs mit jedem der ersten Strahlen verknüpft ist,
einen Prozessor (104), der konfiguriert ist, um eine Strahlauswahl durchzuführen, bei der mindestens ein zweiter Strahl aus ersten Strahlen ausgewählt wird; und
einen Transmitter (1031), der konfiguriert ist, um einen ersten Indikator, der den zweiten Strahl angibt, an die BS zu übertragen, wobei,
wenn empfangene Referenzsignalleistung, RSRP, jedes der CSI-RSs nicht größer als ein vorbestimmter Wert ist, der Prozessor bestimmt, dass kein Strahl aus den ersten Strahlen auszuwählen ist, und **dadurch gekennzeichnet, dass**
der Empfänger weiter konfiguriert ist, um von der BS unter Verwendung von Funkressourcensteuerungs-, RRC-, Signalisierung Informationen zu empfangen, die angeben, ob das UE einen zweiten Indikator übertragen soll, der angibt, dass kein Strahl aus den ersten Strahlen auszuwählen ist, und
wenn die BS fordert, dass ein zweiter Indikator zu übertragen ist, der angibt, dass kein Strahl aus den ersten Strahlen auszuwählen ist, der Transmitter konfiguriert ist, um den zweiten Indikator als eine One-Bit-Information an die BS zu übertragen.

2. UE (10) nach Anspruch 1, wobei der Prozessor die RSRP jedes der mehreren CSI-RSs misst.

3. UE (10) nach Anspruch 1, wobei der erste Indikator als eine vorbestimmte Bitzahl definiert ist und eine Zahl der ersten Strahlen kleiner als zwei hoch die vorbestimmte Bitzahl ist.

4. UE (10) nach Anspruch 1, wobei der erste Indikator als eine vorbestimmte Bitzahl definiert ist und eine Zahl der ersten Strahlen gleich zwei hoch die vorbestimmte Bitzahl ist.

5. Drahtloskommunikationsverfahren, umfassend:
Empfangen, mit einem Benutzerendgerät, UE, mehrerer Kanalzustandsinformationsreferenzsignale, CSI-RSs, die von einer Basisstation, BS, unter Verwendung von ersten Strahlen übertragen werden; wobei jedes der mehreren CSI-RSs mit jedem der ersten Strahlen verknüpft ist;
Durchführen einer Strahlauswahl, bei der mindestens ein zweiter Strahl aus den ersten Strahlen ausgewählt wird; und
Übertragen, von dem UE an die BS, eines ersten Indikators, der den zweiten Strahl angibt;
wobei, wenn empfangene Referenzsignalleistung, RSRP, jedes der CSI-RSs nicht größer als ein vorbestimmter Wert ist, das UE bestimmt, dass kein Strahl aus den ersten Strahlen auszuwählen ist, und **gekennzeichnet durch**
Empfangen, von der BS unter Verwendung von Funkressourcensteuerungs-, RRC-, Signalisierung, von Informationen, die angeben, ob das UE einen zweiten Indikator übertragen soll, der angibt, dass kein Strahl aus den ersten Strahlen auszuwählen ist, und
wenn die BS fordert, dass ein zweiter Indikator zu übertragen ist, der angibt, dass kein Strahl aus den ersten Strahlen auszuwählen ist, Übertragen, von dem UE an die BS, des zweiten Indikators als eine One-Bit-Information an die BS.

6. Drahtloskommunikationsverfahren nach Anspruch 5, weiter umfassend: Messen, mit dem UE, der RSRP jedes der mehreren CSI-RSs.

7. Drahtloskommunikationsverfahren nach Anspruch 5, wobei der erste Indikator als eine vorbestimmte Bitzahl definiert ist und eine Zahl der ersten Strahlen kleiner als zwei hoch die vorbestimmte Bitzahl ist.

8. Drahtloskommunikationsverfahren nach Anspruch 5, wobei der erste Indikator als eine vorbestimmte Bitzahl definiert ist und eine Zahl der ersten Strahlen gleich zwei hoch die vorbestimmte Bitzahl ist.

## Revendications

1. Équipement utilisateur, UE, (10) comprenant :
un récepteur (1031) configuré pour recevoir de multiples signaux de référence d'informations d'état de canal, CSI-RS, transmis depuis une station de base, BS, en utilisant des premiers faisceaux ; dans lequel chacun des multiples CSI-RS est associé à chacun des premiers faisceaux,
un processeur (104) configuré pour effectuer une sélection de faisceau dans lequel au moins un second faisceau est sélectionné parmi des premiers faisceaux ; et
un émetteur (1031) configuré pour transmettre, à la BS, un premier indicateur qui indique le second faisceau, dans lequel
lorsqu'une puissance reçue de signal de référence, RSRP, de chacun des CSI-RS n'est pas supérieure à une valeur prédéterminée, le processeur détermine qu'il n'y a aucun faisceau à sélectionner parmi les premiers faisceaux, et **caractérisé en ce que**
le récepteur est en outre configuré pour recevoir, à partir de la BS utilisant un signalement de commande de ressource radio, RRC, des informations indiquant si l'UE devrait transmettre un second indicateur indiquant qu'il n'y a aucun faisceau à sélectionner parmi les premiers faisceaux, et
lorsque la BS nécessite un second indicateur indiquant qu'il n'y a aucun faisceau à sélectionner parmi les premiers faisceaux à transmettre, l'émetteur est configuré pour transmettre le second indicateur en tant qu'informations à un bit à la BS.

2. UE (10) selon la revendication 1, dans lequel le processeur mesure la RSRP de chacun des multiples CSI-RS.

3. UE (10) selon la revendication 1, dans lequel le premier indicateur est défini en tant qu'un nombre de bits prédéterminé, et un nombre des premiers faisceaux est inférieur à deux à la puissance du nombre de bits prédéterminé.

4. UE (10) selon la revendication 1, dans lequel le premier indicateur est défini en tant qu'un nombre de bits prédéterminé, et un nombre des premiers faisceaux est égal à deux à la puissance du nombre de bits prédéterminé.

5. Procédé de communication sans fil comprenant les étapes consistant à :
recevoir, avec un équipement utilisateur, UE, de multiples signaux de référence d'informations d'état de canal, CSI-RS, transmis depuis une station de base, BS, en utilisant des premiers faisceaux ; dans lequel chacun des multiples CSI-RS est associé à chacun des premiers faisceaux ;
effectuer une sélection de faisceau dans lequel au moins un second faisceau est sélectionné parmi les premiers faisceaux ; et
transmettre, depuis l'UE à la BS, un premier indicateur qui indique le second faisceau ;
dans lequel, lorsqu'une puissance reçue de signal de référence, RSRP, de chacun des CSI-RS n'est pas supérieure à une valeur prédéterminée, l'UE détermine qu'il n'y a aucun faisceau à sélectionner parmi les premiers faisceaux, et **caractérisé par** les étapes consistant à
recevoir, à partir de la BS utilisant un signalement de commande de ressource radio, RRC, des informations indiquant si l'UE devrait transmettre un second indicateur indiquant qu'il n'y a aucun faisceau à sélectionner parmi les premiers faisceaux, et
lorsque la BS nécessite un second indicateur indiquant qu'il n'y a aucun faisceau à sélectionner parmi les premiers faisceaux à transmettre, transmettre, depuis l'UE à la BS, le second indicateur en tant qu'informations à un bit à la BS.

6. Procédé de communication sans fil selon la revendication 5, comprenant en outre l'étape consistant à
mesurer, avec l'UE, la RSRP de chacun des multiples CSI-RS.

7. Procédé de communication sans fil selon la revendication 5, dans lequel le premier indicateur est défini en tant qu'un nombre de bits prédéterminé, et un nombre des premiers faisceaux est inférieur à deux à la puissance du nombre de bits prédéterminé.

8. Procédé de communication sans fil selon la revendication 5, dans lequel le premier indicateur est défini en tant qu'un nombre de bits prédéterminé, et un nombre des premiers faisceaux est égal à deux à la puissance du nombre de bits prédéterminé.
